# EUROPEAN PATENT SPECIFICATION

(11) **EP 0 626 281 B1**
(45) Date of publication and mention of the grant of the patent: **20.11.1996**
(21) Application number: 94830219.5
(22) Date of filing: 09.05.1994
(51) Int. Cl.: B60C 29/06

(54) **Protection device for inflation valves of industrial vehicle tires**
Schutzvorrichtung für Aufblasventile für Nutzfahrzeugreifen
Dispositif de protection de soupape de gonflage de pneus de véhicules industriels

(30) Priority: 24.05.1993 IT TO930114 U
(43) Date of publication of application: 30.11.1994
(73) Proprietor: IVECO FIAT S.p.A., 10156 Torino (IT)
(72) Inventor: Carpino, Mario, I-10036 Settimo Torinese (Torino) (IT); Merli, Costantino, I-10098 Rivoli (Torino) (IT); Coscia, Giuliano, I-10134 Torino (IT)
(74) Representative: Buzzi, Franco

(56) References cited:
- BE-A- 742 847
- DE-U- 9 302 971
- GB-A- 277 654
- US-A- 1 624 974
- US-A- 2 065 088
- US-A- 3 991 804
- US-A- 4 754 523

## Description

The present invention is generally related to industrial vehicle wheels having a rim and a tire with an inflation valve comprising a tubular body fixed at one end to the rim and extending substantially parallel to the rim axis and adjacent to an area of the inner wall thereof.

More particularly, the invention refers to wheels of the above-mentioned type whose rim is intended, in use, to contain a disk brake unit. During operation of vehicles provided of such wheels, and in particular in case of travel along gravelly roads, the problem arises related to the risk, anything but infrequent, of damaging or sometimes shearing the tubular body of the valve. This risk is due to the fact that, when travelling on gravelly roads, the crushed stones penetrating within the rim through the ventilating holes of the wheel and/or from the inner side of the rim, accumulate on the lower part therof and, during rolling of the wheel, are trailed upwardly by the valve body. When the crushed stones reach the disk brake unit, they tend to get stuck for instance within the transverse spaces of the brake caliper and to deflect the tubular body of the valve. Since such body is cantilever secured at one and thereof to the wall of the rim, it can be easely sheared with the consequent need of replacing the tire.

It is known in the art, from US-A-1.624.974 which shows a protection device according to the preamble of Claim 1, a protection system for the inflation valve of a tire, formed by a shield located at the inner side of the rim and extending transversely thereof. This shield is constituted by a sheet metal channel-shaped body permanently fixed to the rim by means of rivets.

Similar solutions are known also from GB-A-277.654 and DE-U-93 02 971.

The above known solutions are generally of a complicated construction and do not ensure the necessary protection of the valve in the aforesaid conditions. Moreover, these known devices are specific for a certain type of wheel and can not be readily adapted to wheels of different types, nor can be easily removed in case of need (for instance in case of inspection of the valve), nor can be conveniently applied to already existing wheels.

The object of the present invention is to overcome the above drawbacks in a simple, functional and economic way.

In order to achieve the above object, the present invention provides a protection device for inflation valves of industrial vehicle tires, in particular for wheels of the type set forth at the beginning, the main feature of which resides in that it comprises a ring adapted to be adjustably and releasably locked against the inner wall of the rim in axial correspondence of the area of the tubular body of the inflation valve and having a channel element intended to be positioned astride of said tubular body of the valve.

According to a preferred embodiment of the invention, the ring is constituted by a metal strap and the channel element is formed by a bent portion of such a strap.

By virtue of this idea of solution, integrity of the tubular body of the valve is effectively protected, since any contact thereagainst by crushed stone possibly collected in use within the wheel rim is prevented. The crushed stone possibly trailed into contact with the brake unit, actually slides away on the protection ring and is diverted without any risks of interference with the valve body.

To the aim of facilitating sliding of the crushed stone in case of contact with the disk brake unit, the channel element of the protection ring has conveniently a rounded profile.

In order to enable application onto rims of different diameters, the protection rig is advantageously open and is provided with an adjustable closure device.

Said ring may moreover be provided with outer positioning projections, conveniently formed by angularly-spaced blocks, for the positioning and constraint thereof inside the rim.

Further features and advantages of the invention will become apparent through the following detailed description, with reference to the annexed drawings, provided purely by way of non-limiting example, wherein:
- figure 1 is a diagrammatic and axially-sectioned view of a protection device according to the invention applied to an industrial vehicle wheel,
- figure 2 is a perspective view of the protection device,
- figure 3 is a sectioned and enlarged view along line III-III of figure 2,
- figure 4 is a lateral elevational view according to arrow VI of figure 3,
- figure 5 is a perspective and enlarged view of a part of figure 2 according to an alternative embodiment of the invention,
- figure 6 is a partial and enlarged view of figure 1 with the alternative embodiment of figure 5, and
- figure 7 is a cross section alonf line VII-VII of figure 5.

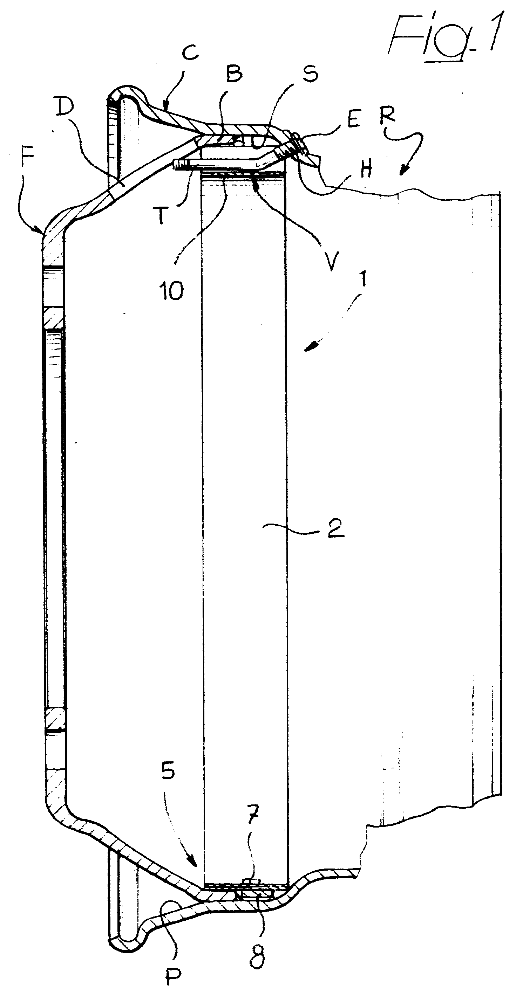

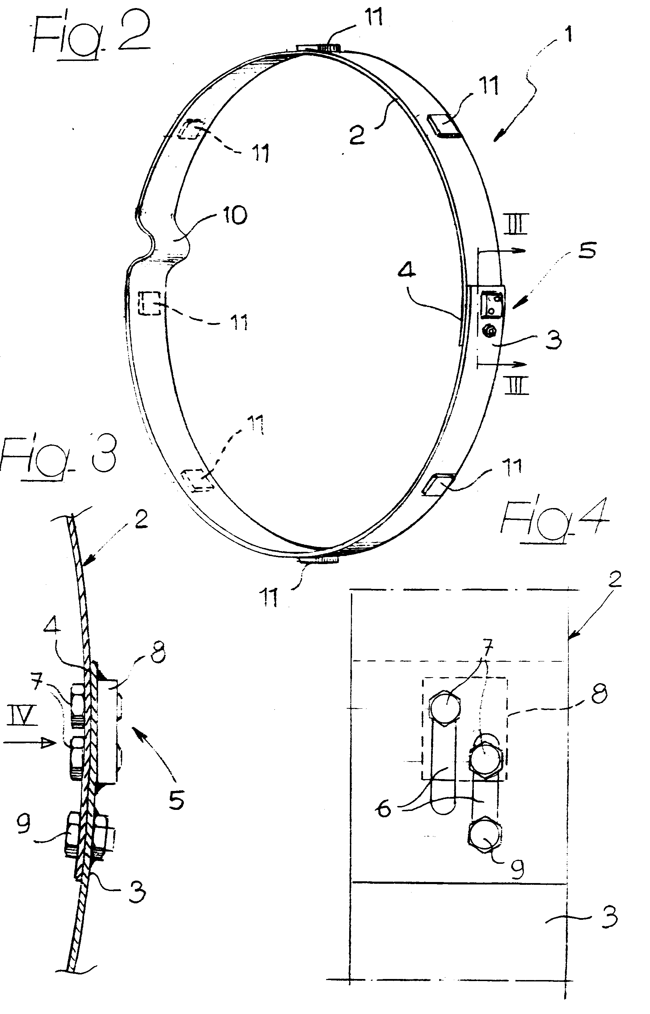

Referring initially to figures 1-4, reference R designates as a whole a wheel for industrial vehicles, normally a front wheel intended to house therein a disk brake unit of conventional type, not shown.

The wheel R comprises, also in a conventional way, a rim C of stamped sheet metal on which a tire, not shown, is intended to be fit.

The wheel R further includes a pierced front disk F whose circumferential edge B is bent and fixed normally by welding onto the inner wall P of the rim C.

This wall P is formed with an annular depression S adjacent to which extends, in a direction substantially parallel to the axis of the wheel R, the tubular body T of an inflation valve V of the tire. The valve V, of conventional type, is fixed at one end E to the rim C, through a hole H thereof, and is accessible from outside, at its opposite end, through one hole of the disk F.

With this disposition the tubular body T of the inflation valve V would normally be subject in use to risks of breaking due, as preaviously explained, to the contract against crushed stone possibly penetrated within the rim C and trailed by the tubular body T itself into contact with the disk brake unit.

In order to avoid this risk, the invention provides employing a protection device constituted by a simple ring 1, shown in better detail in figures 2 through 4.

The ring 1 is conveniently formed by a circular open metal strap 2, the ends 3, 4 of which overlap each other and are rigidly connected therebetween through an adjustable closure device 5. This device 5 is formed by a pair of parallel and offset slits 6, formed in the end 4 and through which two holding screws 7 are fitted, which are threadably engaged with a block 8 in turn fixed onto the outer surface of the other end 3. The device 5 enables variations of the diameter of the ring 1 to the aim of adapting same to rims 5 of different sizes. In the lowest diameter condition, shown in the drawings, a bolt 9 tightening the terminal portion of the end 4 against the end 3 is also employed.

On the side opposite to the closure device 5, the strap 2 is formed with a channel portion 10, bent inwardly of the ring 1. The walls of the channel portion 10 are greatly sloped so as to radius to the strap 2 following a rounded profile.

Outer centering and holding blocks 11, angularly equi-spaced from one another, are secured to the outer surface of the strap 2, for instance by welding.

In use, the protection ring 1 is applied such as shown in figure 1, i.e. against the inner wall P of the rim C with the centering blocks 11 seated within the circumferential depression S, and with the channel portion 10 placed astride of the tubular body T of the inflating valve V. The closure device 5 is adjusted so as to keep the outer surface of the strap 2 into as far as possible forced engagement against the inner wall P of the rim C, so as to ensure a firm radial and axial constraint thereof, also by virtue of the presence of the outer blocks 11.

The tubular body T of the valve V is thus efficiently protected aginst risks of breakage possibly deriving from the presence of crushed stone inside the rim C. The rounded conformation of the said channel part 10 facilitates sliding and falling down of the cruhed stone even in the case same is trailed, during rotation of the wheel R, against the disk brake unit associated thereto.

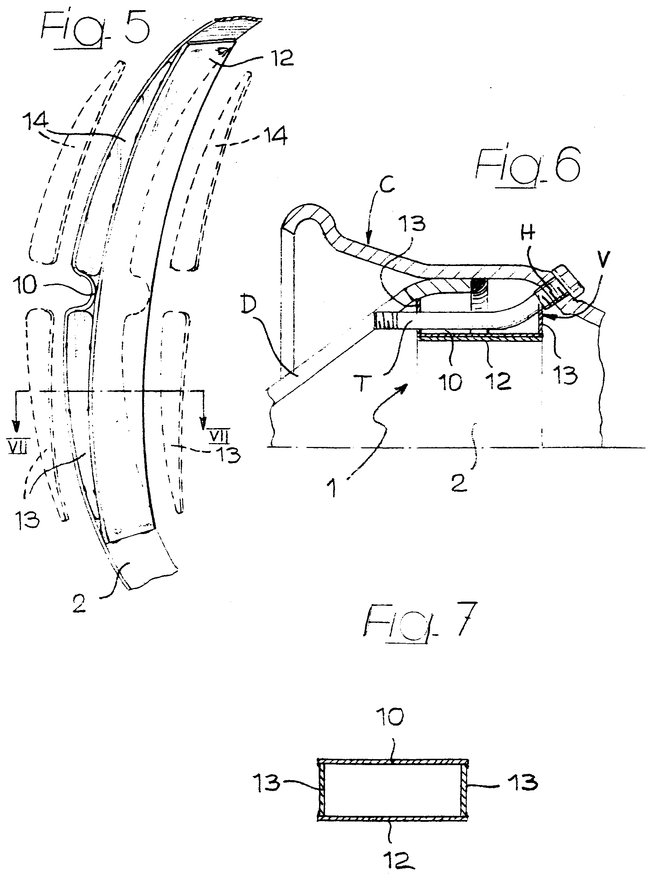

Naturally the details of construction and the embodiments can be widely varied with respect to what has been described and illustrated, without thereby departing from the scope of the invention such as defined in the appended claims. Thus, for example, a possible alternative embodiment is shown in figures 5 through 7, wherein identical or similar parts to those already disclosed are indicated by the same numeral references.

According to this embodiment, an additional stiffening structure is provided in the valve area, which is particularly effective in order to increase resistance to deflection of the channel element 10 of ring 1 which may be caused by any crushed stone penetrated in use between the rim C of the wheel R and the associated disk brake unit.

This additional stiffening structure is formed by a metal band 12 having an arcuate profile, which is secured on the inner side of the strap 2 with the central area thereof resting against the channel element 10 and the opposite ends thereof rigidly fixed to the strap 2, for instance by welding. Two pairs of metal lateral walls 13, 14, having a generally triangular shape, are fixed for instance by welding between the corresponding edges of the strap 2 and band 12, so as to define, on one side and on the opposite side of the channel element 10, two box-like stiffening structures providing a further protection of the tubular body T of the inflation valve V.

Also in this case the ring 1 can be secured to the rim C of the wheel R by a simple forced-expansion fit, can be easily removed so as to allow any checking of the valve V, and can be readily adjusted to even already existing wheels of different diameters.

## Claims

1. Protection device for inflation valves (V) of industrial vehicle tires, particularly of wheels (R) having a rim (C) intended to contain in use a disk brake unit, and wherein the inflation valve (V) comprises a tubular body (T) fixed at one end (E) to the rim (C) and extending substantially parallel to the axis of the rim (C) and adjacent to an area (S) of the inner wall (P) thereof, characterized in that it comprises a ring (1) adapted to be adjustably and releasably locked against the inner wall (P) of the rim (C) in axial correspondence of the area of the tubular body (T) of the inflation valve (V) and provided with a channel element (10) intended to be positioned astride of said tubular body (P).

2. Device according to claim 1, characterized in that the ring (1) is constituted by a metal strap (2) and in that the said channel element (10) is formed by a bent portion of said strap (2).

3. Device according to claim 2, characterized in that said channel element (10) has a rounded profile.

4. Device according to any of the preceding claims, characterized in that said ring (1) is open and is provided with an adjustable closure device (5) for varying the diameter of the ring (1).

5. Device according to any of the preceding claims, wherein said area of the rim (C) adjacent to which the tubular body (T) of the inflation valve (V) extends, has an annular depression (S), characterized in that the ring (1) is provided with outer positioning blocks (11), angularly spaced from one another for engagement within said annular depression (S) of the rim (C).

6. Device according to any of the preceding claims, characterized in that it further comprises a stiffening band (12) fixed to said ring (1) against the channel element (10).

7. Device according to claim 6, characterized in that said stiffening band (12) and said ring (1) are rigidly connected to each other by two pairs of lateral walls (13, 14) defining respective box-like structures placed on opposite sides of said channel element (10).

## Patentansprüche

1. Schutzvorrichtung für Aufblasventile V von Industriefahrzeugreifen, insbesondere von Rädern (R) mit einer Felge (C), die dazu bestimmt ist, im Einsatz eine Bremsscheibeneinheit aufzunehmen, und wobei das Aufblasventil (V) einen rohrförmigen Körper (T) aufweist, der an einem Ende (E) an der Felge (C) befestigt ist und sich im wesentlichen parallel zur Achse der Felge (C) sowie angrenzend an einem Bereich (S) der Innenwandung (P) von ihr erstreckt, dadurch gekennzeichnet, daß sie einen Ring (1) aufweist, der dazu ausgelegt ist, gegenüber der Innenwandung (P) der Felge (C) in axialer Entsprechung der Grundfläche des rohrförmigen Körpers (T) des Aufblasventils (V) einstellbar sowie lösbar versperrt zu werden, und der mit einem Kanalelement (10) versehen ist, der dazu bestimmt ist, rittlings vom rohrförmigen Körper (P) angeordnet zu werden.

2. Vorrichtung nach Anspruch 1, dadurch gekennzeichnet, daß der Ring (1) durch einen Metallstreifen (2) gebildet ist, und daß das Kanalelement (10) durch einen gebogenen Abschnitt des Streifens (2) gebildet ist.

3. Vorrichtung nach Anspruch 1, dadurch gekennzeichnet, daß das Kanalement (10) ein verrundetes Profil aufweist.

4. Vorrichtung nach einem der vorangehenden Ansprüche, dadurch gekennzeichnet, daß der Ring (1) offen ist und mit einer einstellbaren Verschlußeinrichtung (5) zum Variieren des Durchmessers des Rings (1) versehen ist.

5. Vorrichtung nach einem der vorangehenden Ansprüche, wobei der Bereich der Felge (C), angrenzend zu welchem sich der rohrförmige Körper (T) des Aufblasbventils (V) erstreckt, eine ringförmige Eindrückung (S) aufweist, dadurch gekennzeichnet, daß der Ring (1) mit äußeren Positionierblöcken (11) versehen ist, die zum Eingriff mit der ringförmigen Eindrückung (S) der Felge (C) winkelmäßig voneinander beabstandet sind.

6. Vorrichtung nach einem der vorangehenden Ansprüche, dadurch gekennzeichnet, daß sie außerdem ein Versteifungsband (12) aufweist, das am Ring (1) gegen das Kanalelement (10) befestigt ist.

7. Vorrichtung nach Anspruch 6, dadurch gekennzeichnet, daß das Versteifungsband (12) und der Ring (1) starr miteinander durch zwei Paare von Seitenwänden (13, 14) verbunden sind, die jeweilige kastenartige Strukturen festlegen, auf gegenüberliegenden Seiten des Kanalelements (10) angeordnet sind.

## Revendications

1. Dispositif de protection pour valves de gonflage (V) de pneumatiques de véhicules industriels, en particulier de roues (R) ayant une jante (C) destinée à contenir en utilisation une unité de frein à disque, et dans lequel la valve de gonflage (V) comprend un corps tubulaire (T) fixé à la jante (C) par une première extrémité (E) et s'étendant sensiblement parallèlement à l'axe de la jante (C) et dans une région adjacente à une zone (S) de la paroi intérieure (P) de cette jante, caractérisé en ce qu'il comprend un anneau (1) adapté pour être verrouillé de façon réglable et démontable contre la paroi intérieure (P) de la jante (C) au niveau axial de la région du corps tubulaire (T) de la valve de gonflage (V) et muni d'un élément (10) en forme de gouttière destiné à être positionné à cheval sur ledit corps tubulaire (P).

2. Dispositif selon la revendication 1, caractérisé en ce que l'anneau (1) est constitué par une bande métallique (2) et en ce que ledit élément (10) en forme de gouttière est formé par une partie pliée de ladite bande (2).

3. Dispositif selon la revendication 2, caractérisé en ce que ledit élément (10) en forme de gouttière possède un profil arrondi.

4. Dispositif selon une quelconque des revendications précédentes, caractérisé en ce que ledit anneau (1) est ouvert et muni d'un dispositif de fermeture réglable (5) permettant de faire varier le diamètre de l'anneau (1).

5. Dispositif selon une quelconque des revendications précédentes, dans lequel ladite zone de la jante (C) le long de laquelle le corps tubulaire (T) de la valve de gonflage (V) s'étend présente une dépression annulaire (S), caractérisé en ce que l'anneau (1) est muni de blocs de positionnement extérieurs espacés angulairement les uns des autres pour s'engager dans ladite dépression annulaire (S) de la jante (C).

6. Dispositif selon une quelconque des revendications précédentes, caractérisé en ce qu'il comprend en outre une bande raidisseuse (12) fixée audit anneau (1) contre l'élément (10) en forme de gouttière.

7. Dispositif selon la revendication 6, caractérisé en ce que ladite bande raidisseuse (12) et ledit anneau (1) sont reliés rigidement l'un à l'autre par deux paires de parois latérales (13, 14) qui définissent des structures en caisson respectives placées sur les côtés opposés dudit élément (10) en forme de gouttière.
